# EUROPEAN PATENT APPLICATION

(11) **EP 0 747 246 A1**
(43) Date of publication of application: **11.12.1996**
(21) Application number: 95850102.5
(22) Date of filing: 07.06.1995
(51) Int. Cl.: B60G 21/055

(54) **Bearing arrangement for a vehicle anti-roll bar**

(71) Applicant: AB VOLVO, 405 08 Göteborg (SE)
(72) Inventor: Brokholc, Michal, S-436 45 Askim (SE)
(74) Representative: Harrison, Michael Charles

(57) **Abstract**

The invention relates to a bearing arrangement for a vehicle anti-roll bar (4) including a bush (1) of a flexible material. A rigid sleeve element (2) is fixedly attached to the outer surface (19) of the anti-roll bar (4), the sleeve element (2) having an outer cylindrical surface (11) providing sliding rotation of the sleeve element (2) with respect to the bush (1). The invention also relates to a bush (1) and an anti-roll bar (4) for use in the bearing arrangement as well as to a method of production of said anti-roll bar.

## Description

### Field of the invention:

The invention relates to a bearing arrangement for a vehicle anti-roll bar as defined in the preamble of claim 1. The invention also relates to a bush and an anti-roll bar for use in said bearing arrangement. The invention further relates to a method of production of said anti-roll bar.

### Background to the invention

Anti-roll bar arrangements in accordance with those defined in the preamble of claim 1 are known. Such arrangements are used to resist roll of the vehicle caused by relative movements of the suspension on either side of the vehicle, both at the front and at the rear.

Anti-roll bars are mounted on the vehicle chassis normally on both sides of the vehicle in such a way that the antiroll bar allows vertical movements of the suspension on one side of the vehicle to cause similar vertical movements on the other side of the vehicle and thus help reduce vehicle roll. In order to do this, the vertical movement of the anti-roll bar at one suspension location is transposed into a rotational movement of the roll bar by a part of the roll bar at either end thereof being formed as a lever arm.

Thus, the mounting of the anti-roll bar on the vehicle must permit a rotational movement of the anti-roll bar portion extending between the two sides of the vehicle and this requires a type of bearing arrangement. Similarly, the anti-roll bar should be substantially prevented from moving vertically in the mounting and also from moving transversely in the mounting.

Until now it has been very difficult to satisfy these requirements simultaneously and car manufacturers have instead adopted a compromise by using a rubber bush element which is fitted around a portion of the anti-roll bar and clamped to the vehicle, typically by means of a curved bracket. However such bearing arrangements do not lend themselves to accuracy regarding their placement during assembly and are not particularly effective in resisting transverse movements of the anti-roll bar during driving. Additionally, many different diametrical dimensions are used for anti-roll bars of different vehicles. Thus when assembling vehicles having different anti-roll bar dimensions at the front and rear or with differences between models, it is very easy to confuse which bush elements belong to which anti-roll bar size, since the diameter often varies by only a millimeter or so.

In an attempt to overcome these difficulties, it is known to mould the rubber mounting bushes directly on to the anti-roll bars in the appropriate position. However, particularly soft rubber is required for such a process and the rubber mountings are subject to significant fatigue caused by the torque applied to the bush by the anti-roll bar rotation. This can cause cracking and splitting as well as allowing earlier water ingress into the material, all of which may lead to early failure. Furthermore, an additional drawback arises with this moulding method since the time taken to mould the rubber bush onto the anti-roll bar is of the order of 6 minutes which is a drawback when considering the requirements of high speed car production. A still further drawback is that the resistance to transverse and vertical movement of the anti-roll bar during use is poor since the rubber lacks stiffness in all directions.

Thus it can be seen that the vehicle industry has been faced with a significant problem in respect of obtaining an anti-roll bar mounting arrangement which is functionally effective and durable, yet easy and cost-effective to manufacture and assemble.

### Summary of the invention

The present invention overcomes one or more of the aforementioned problems by providing a bearing arrangement in accordance with the features defined in claim 1. The invention further provides a bush and an anti-roll bar for use in the bearing arrangement. Additionally the invention provides a method of producing said anti-roll bar.

As will be clear upon reading this description of the bearing arrangement, the use of a sleeve element mounted on the anti-roll bar means that there is no longer any requirement to have a selection of different sizes of mounting bushes for differing diametrical sizes of anti-roll bar. This is due to the fact that the present invention allows the use of a single size of internal opening in the bush element since the sleeve element fixed to the anti-roll bar can have a constant outer diameter for all anti-roll bar sizes. Such an improvement has significantly advantageous rationalisation effects.

Moreover an improved longevity of the bush is obtained since the outer surface of the sleeve and the inner surface of the bush are arranged so as to allow actual rotation of one element with respect to the other, in particular a sliding rotational contact which of course is also relatively silent.

By using a separate, rigid (or relatively rigid) sleeve element attached to the anti-roll bar, the flexibility of the entire bearing arrangement can be carefully controlled by selecting an appropriate material for the bush member.

### Brief description of the figures

Various embodiments of the invention will now be described with reference to the accompanying drawings, in which
- Fig. 1: shows a cross-sectional view through a first embodiment of a bearing arrangement in accordance with the present invention,
- Fig. 2: shows a cross-sectional view of the bearing arrangement according to Fig. 1 taken through line II-II in Fig. 1,
- Fig. 3: shows an embodiment similar to that in Fig. 2, except that the bush element has been provided with attachment flanges and an attachment plate, for attachment to the vehicle without the use of a separate bracket.

### Detailed description of preferred embodiments

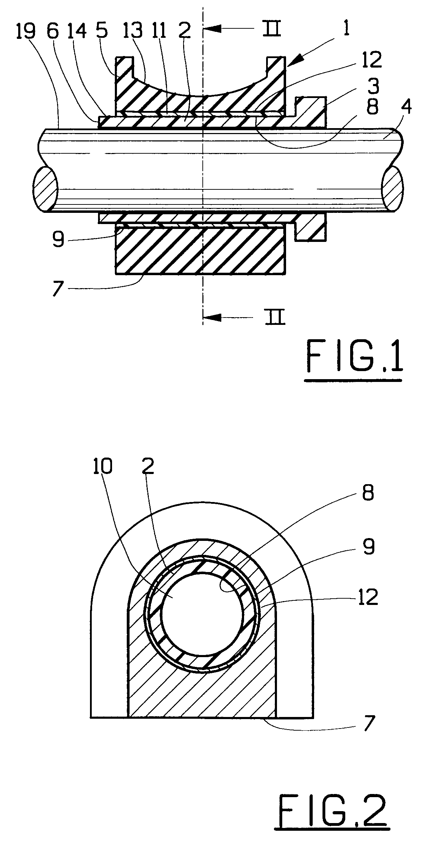

The bearing arrangement shown in Figs. 1 and 2 comprises three main parts, namely a flexible bush 1, a sleeve element 2 and a shaft 4 to which the sleeve element 2 is rigidly attached. The cross sectional view of the arrangement shown in Fig. 2 shows the same arrangement with the central shaft 4 omitted.

The bush 1, preferably of rubber, is formed with a substantially axial cylindrical opening 10 therein. The bush itself is designed to be attached to the vehicle in some suitable manner and thus the outside of the bush is, for example, provided with an arcuate surface 13 between raised opposing end faces 5. A curved bracket (not shown) or clamp is then fitted over the arcuate surface 13 and held to the vehicle by means of bolts or other attachment means (not shown). The lower surface 7 of the bush 1 has been formed as a planar surface to assist in positionally locating the arrangement during assembly.

The surface 12 of the cylindrical opening 10 is formed so as to allow sliding rotation of the sleeve element 2 with respect to the surface 12. This is achieved either by making the diameter of the surface 12 marginally larger than the sleeve element outer diameter or, more preferably, by arranging the element 3 to be a sliding fit within the central opening. A lining 9 may be suitably added to the surface 12 of the opening whereby the lining provides a low-friction surface 8 facing the sleeve element 2. Such a lining 9 on the inner surface of the bush 1 may for example be constituted by a surface treatment using a coating or the like so as to ensure a sliding contact.

Due to the rotational relationship between the two elements 1 and 2, the rotational movements of the anti-roll bar 4 during use will not cause hysteresis fatigue of the rubber bush 1 to any great degree.

Whilst the dimensions of the bush 1 may vary according to requirements, it is noted that typical dimensions for passenger car applications might be about 40 mm axial length, about 50 mm height and a diameter of the central opening of some 26 mm. Moreover, by using the arrangement according to the present invention, only one size of bush element is required for different diameters of vehicle anti-roll bar if the outer diameter of the sleeve element 2 is kept the same for different sizes of anti-roll bar.

The sleeve element 2 is made of a relatively rigid material such as plastics or the like. However, in principal, metal could also be used although this would, amongst other things, increase vehicle weight unnecessarily. The sleeve element as shown comprises a cylindrical tube portion 6 of substantially constant outer diameter ending in an abutment surface 3 at one end thereof (either end may contain such an abutment surface). The abutment surface 3, normally in the form of a flange formed integrally with the tube portion 6, acts as an axial abutment against the respective end face 5 of the fixed bush 1. In this way transverse movement of the anti-roll bar is effectively prevented. Since there are normally two bearing arrangements at either end of the anti-roll bar on a vehicle, it will be understood that a flange 3 on both ends of the sleeve is not required, which in turn allows not only less material in the sleeve element but also easier mounting of each of the bushes 1 on to its respective portion of the anti-roll bar during assembly. However, the use of two flanges 3 at either end of the tube part 6 is of course feasible.

The outer cylindrical surface 14 of the tube portion 6 is formed smooth so as to reduce friction against the contacting surface 12 (in the case where no liner 9 is present) or alternatively against the surface 8 of the liner 9.

The sleeve element 2 is fixedly attached to the anti-roll bar 4 before fitting to the vehicle. This attachment can be carried out in many ways although the most preferred ways are either by using bonding (e.g. by means of an adhesive) between the inner surface of the sleeve member 2 and the outer surface 19 of the bar 4 or by moulding (e.g. injection moulding) the plastic sleeve element 2 to the outer surface 19 of the bar. The latter method however has the advantage that a supply of individual sleeves of different sizes is not required and that the extra step of applying an adhesive and controlling its quality is not required.

Whatever method is used however, the advantage is still obtained that the sleeve element 2 will be accurately prelocated on the anti-roll bar 4 before assembly onto the vehicle and can have a constant outer diameter for all, or many, vehicle types. Such an anti-roll bar with pre-fitted sleeve element is thus of significant economical advantage as is its method of production. Similarly a flexible bush 1 formed with a low friction, single diameter inner surface 8 or 12 for use with such an anti-roll bar provides significant economical and assembly advantages.

Mounting the bush to the anti-roll bar and to the vehicle may occur in a number of ways. When using the bush shown in Figs. 1 and 2, the bush may for example be mounted in two particular ways. If the bush is slit axially (e.g. from left to right in Fig. 1), then the bush can simply be opened at the slit (not shown), fitted over the sleeve element 2 and clamped in place on the vehicle chassis by use of a per se known bracket. Alternatively, if the bush 1 is not slit, it may be slid over the end of the anti-roll bar and over the sleeve element 2 up to abutment with the flange 3 and then fixed in place using a bracket. Whilst the latter method does not require slitting, the task of threading the bush over the curved portion (not shown) of the anti-roll bar 4 at the end thereof normally takes longer.

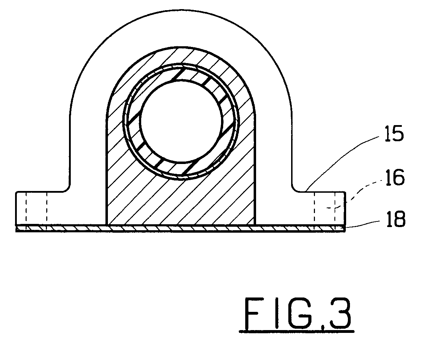

The embodiment shown in Fig. 3 is a further improvement of the bush of Fig. 2, wherein instead of requiring an additional bracket to mount the bush 1 to the vehicle, the bush is provided, at its lower end, with two integrally-formed flange elements 15 on either side of the main body of the bush, which flange elements 15 may extend along the length of the bush (i.e. from left to right according to Fig. 1). Said flange elements are in turn provided with holes 16 through which bolts can pass for attachment to the vehicle. Although not a requirement, such a bush might be provided with a lower rigid plate element 18 bonded to said flexible bush element 1 so as to provide more strength at the attachment location.

Whilst the invention has been described with reference to particular embodiments thereof, it is to be understood that the invention is not limited to said embodiments and may be varied widely within the scope of the appended claims.

## Claims

1. Bearing arrangement for a vehicle anti-roll bar, said bearing arrangement comprising a bush (1) of a flexible material, wherein said bush has a cylindrical opening (10) therethrough, **characterized in that** a sleeve element (2) is fixedly attached to the outer surface (19) of said anti-roll bar, and in that said sleeve element (2) has an outer cylindrical surface (11) allowing sliding rotation of said sleeve element (2) with respect to said bush (1).

2. Bearing arrangement according to claim 1, **characterized in that** said cylindrical opening (10) has an inner surface (8) which is formed of a low-friction material.

3. Bearing arrangement according to claim 2, **characterized in that** said inner surface (8) is formed by attaching a liner (9) of a low friction material to the surface (12) of the cylindrical opening (10).

4. Bearing arrangement according to any one of the preceding claims**, characterized in that** said sleeve element (2) is dimensioned to be a sliding fit within said bush (1).

5. Bearing arrangement according to any one of the preceding claims**, characterized in that** said sleeve element (2) has an axial length which is greater than the axial length of said bush (1).

6. Bearing arrangement according to any one of the preceding claims, **characterized in that** said sleeve element (2) comprises a tube portion (6) of substantially constant diameter and an axial abutment surface (3) at least at one of its ends.

7. Bearing arrangement according to claim 6, **characterized in that** said axial abutment surface (3) is constituted by a flange-like element formed integrally with said tube portion (6) of said sleeve element (2).

8. Bearing arrangement according to any one of the preceding claims, **characterized in that** said sleeve element (2) is made of plastics and is fixedly attached to said anti-roll bar (4) by adhesive or by being moulded thereto.

9. Bush (1) for use in a bearing arrangement according to any one of the preceding claims, wherein said bush (1) is formed of a flexible material and has a cylindrical opening (10) therethrough, **characterized in that** a low-friction material (9) is applied to the surface (12) of said cylindrical opening (10).

10. Bush according to claim 9, **characterized in that** said bush is formed of rubber with a substantially planar lower surface (7), said bush further presenting an enlarged portion (15) for attachment to a vehicle.

11. Anti-roll bar for use in the bearing arrangement according to any one of claims 1 to 8**, characterized in that** a rigid sleeve element (2) is fixedly attached to the outer surface (19) of said anti-roll bar (4) at a location corresponding with its location for mounting to a vehicle, and in that said sleeve element (2) has an outer cylindrical surface (11) of substantially constant diameter along the major proportion of its length.

12. Anti-roll bar according to claim 11, characterized in that said sleeve element is made of plastics material and has one abutment surface (3) at least at one end thereof.

13. Method of producing an anti-roll bar according to claim 11 or 12, **characterized in that** said sleeve element (2) is formed of plastics material and in that said sleeve element is injection moulded around the outer surface (19) of a straight portion of said anti-roll bar (4).

14. Method of producing an anti-roll bar according to claim 11 or 12, **characterized in that** said sleeve element (2) is formed of plastics material, and in that said sleeve element (2) is attached around the outer surface (19) of a straight portion of said anti-roll bar (4) by means of bonding, for example by using adhesive.
